# EUROPEAN PATENT SPECIFICATION

(11) **EP 3 548 723 B1**
(45) Date of publication and mention of the grant of the patent: **07.07.2021**
(21) Application number: 17821812.9
(22) Date of filing: 01.12.2017
(51) Int. Cl.: F01P 7/08, F16D 35/02

(54) **COOLING SYSTEM FOR ENGINES WITH ELECTROMAGNETIC FAN CLUTCH**
KÜHLSYSTEM FÜR MOTOREN MIT ELEKTROMAGNETISCHER LÜFTERKUPPLUNG
SYSTÈME DE REFROIDISSEMENT POUR MOTEURS AVEC EMBRAYAGE DE VENTILATEUR ÉLECTROMAGNÉTIQUE

(30) Priority: 02.12.2016 IT 201600122636
(43) Date of publication of application: 09.10.2019
(73) Proprietor: PIAGGIO & C. S.p.A., 56025 Pontedera (Pisa) (IT)
(72) Inventor: FRESCHI, Giacomo, 56025 Pontedera (PI) (IT); MATTEO PUCCIONI, 56025 Pontedera (PI) (IT)
(74) Representative: Mannucci, Michele
(86) International application number: PCT/EP2017/081212
(87) International publication number: WO 2018/100170

(56) References cited:
- EP-A1- 1 248 007
- EP-A2- 1 577 142
- DE-A1- 4 344 085
- DE-A1- 19 604 851
- DE-A1- 19 821 097
- US-A- 3 924 585

## Description

The present invention is related to a cooling system of an engine, such as an air cooled engine, for example for a scooter wherein a cooling fan is controlled by an auxiliary shaft rotated by the crankshaft of the engine, or directly by the crankshaft itself.

However, it is to be understood that a similar solution can be applied also for liquid operated cooling systems, i.e. water-cooled engines, wherein a radiator is cooled by a fan directly or indirectly driven by the crankshaft itself.

This cooling system is also effectively used in engines for motorcycles wherein, on the motor axis, both the air fan and an electric motor-generator are keyed, to drawn fresh air into the engine and to charge an electric battery, to start the internal combustion engine and, if necessary, to deliver power when the motorcycle is of the so-called hybrid propulsion type.

The internal combustion engine crankshaft is transversal to the longitudinal development of the motorcycle and is therefore horizontal with respect to a ground plane, and perpendicular to a vertical plane substantially defined by the rotating plane of the fixed, i.e. non-steering, rear wheel when the motorcycle moves forward according to a straight line.

Conveniently, the fan allowing the engine cooling can be driven directly by one end of the crankshaft, or by another shaft adjacent to and parallel to the crankshaft.

The positioning of the protective guard through which the air is drawn makes the air flow hit the guard not frontally but tangentially. The air flow required for the engine cooling is then drawn by the fan whose axis is substantially perpendicular to the airflow due to the forward motion of the motorcycle.

Therefore, the fan should have a predetermined head to meet the engine cooling requirements.

In known examples of cooling systems, wherein the fan is not driven independently by the rotation of the crankshaft, for example by means of an electric service motor, the fan rotation regime does not directly depend upon cooling requirements but is determined by the engine rotation regime.

However, it is apparent that the engine may have cooling requirements that do not depend upon the engine rotation regime, for example at the starting thereof, or with a particularly cold climate.

These unfavourable conditions do not imply that the fan is stopped: actually the fan keeps drawing an air flow with a certain head depending upon the engine shaft rotation regime, and in these situations it does not produce any benefits but increases the engine fuel consumption.

It should be noted that this disadvantage occurs whenever a cooling fan is rotated with a direct correlation between its rotation and the engine speed.

For example, in the system disclosed in patent application EP 1,248,007 A, a fan driven by a crankshaft is dragged by an electromagnet. A further similar solution is provided by European application No. EP 1,577,142 A. A Cooling system of an internal combustion engine comprising a cooling fan and a driving shaft, said fan being connected to said driving shaft by means of a coupling system according the preamble of claim 1 is also known from the German patent application DE19821097A1.

In these solutions, an electromagnet connects a fan on a rotating shaft, moving them between an engagement position with a service motor and a disengagement position from said motor.

These solutions have the drawback that the fan moves axially between two positions, with the risk that dirt or debris may block axial sliding between the engaging and disengaging positions. In addition, these solutions are difficult to maintain, as replacing the electromagnetic actuation system it is necessary to completely disassemble the cooling system.

Finally, these solutions provide the positioning of the electromagnet between the actuating motor and the fan and this type of arrangement of the electromagnet is incompatible with the possibility of mounting the cooling system on the crankshaft within a reduced volume.

The technical problem underlying the present invention is to provide a cooling system for engines to overcome the drawbacks mentioned with reference to the prior art.

This problem is solved by a cooling system as specified in appended claim 1.

In the particular case of an air-cooled internal combustion engine, the engine reference temperature is that of the engine oil, which is internally detected by the engine, so that in this case a direct correlation is also established between the engine oil, the fan clutch and the internal engine temperature. In addition, the engine can reach its operating temperature in a shorter time, allowing further energy savings in the oil pump operation.

The main advantage of the cooling system according to the present invention lies in allowing the fan to be driven only on the rise of the inner temperature of the engine: at low temperature, the fan does not rotate and the energy consumption is optimized.

The present invention will be described hereinafter according to a preferred embodiment thereof, provided for exemplifying and not limiting purposes with reference to the accompanying drawings wherein:

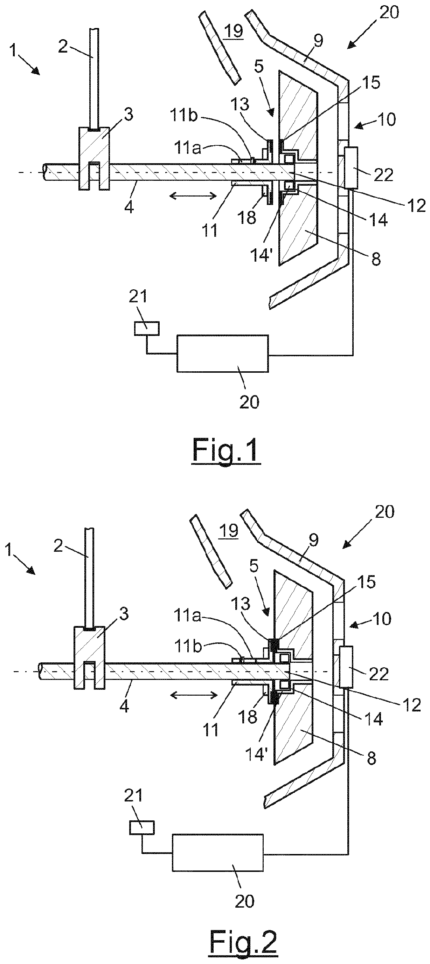

Figures 1 and 2 show a sectional view of an internal combustion engine part of a motorcycle incorporating a cooling system according to the present invention.

With reference to Figures 1 and 2, a drive unit 1 is partially represented. In this embodiment, this unit 1 comprises an air-cooled, single-cylinder internal combustion engine, and a piston rod 2 and a crank 3 belonging to a crankshaft 4 transmitting the motion to transmission members.

The crankshaft 4 can also be connected to an electric motor (not shown) comprising respective stator windings. The electric motor can be an electric current generator that provides power to the combustion engine and to any service and/or to charge a battery. It is also intended that this electric motor may also carry out the engine start and it also can be an electric motor-generator both charging an electric battery, when the internal combustion engine is powered up, and possibly supply the motorcycle with driving power, when the motorcycle is of the so-called hybrid propulsion type.

It should be noted that the crankshaft 4 is transverse to the longitudinal development of the motorcycle and it is therefore horizontal with respect to a ground plane and perpendicular to a vertical plane substantially defined by the rotating plane of the fixed, i.e. non-steering, rear wheel when the motorcycle moves forward along a straight line.

Figures 1 and 2 show a schematic sectional view of the system according to the present invention, in particular a propulsion unit 1 comprising a cooling system 20 having a cooling fan keyed to the crankshaft 4 by means of a swivel connection 14', so that the crankshaft acts as driving shaft of the fan.

The fan 8 is disposed inside a container 9 radially surrounding it and defining an intake aperture 10 and a partially represented distribution channel 19 which directs the air flow in the direction of the engine block, i.e. in the case of an air-cooled engine. Said intake aperture may include a guard placed in front of the fan 8 to protect it.

If the engine is water-cooled, the geometry described above would largely be maintained: the intake aperture would be facing a radiator located on one side of the motorcycle and the air would be drawn through it and through a protective guard.

It is understood that the fan may be connected to a driving shaft other than the crankshaft, possibly driven thereby, to disengage the fan from the crankshaft.

In a first embodiment, the shaft 4 comprises, near the distal end 12 thereof, a coupling system with the fan 8 which, in the present example, is made of a clutch 5 consisting of a first movable clutch member 11 axially connected to said distal end 12 of the crankshaft 4 so that it can be dragged in rotation by the shaft 4 supporting a first clutch disk 13. The first clutch member 11 is torsionally coupled to the shaft 4 and axially movable if compared to the latter. This type of connection can be implemented by means of a pin 11b integral with the shaft 4 sliding axially into a slot 11a of the first clutch member 11 oriented in a direction parallel to the symmetry axis of the first clutch member 11.

The clutch 5 further comprises a second clutch member 14 axially fixed, facing the first clutch member 11 but released therefrom. It supports a second clutch disk 15, which drives the fan 8 when it comes into contact with said first clutch disk 13.

The coupling system further comprises a magnetic element 18 supported by said first clutch member 11 and preferably ringshaped, the magnetic element 18 being provided with a polarity between the opposed faces thereof, one towards the fan 8 and the other to the opposite side. The magnetic element 18 is preferably a permanent magnet.

It is possible to act on the magnetic element with a magnetic attraction or repulsion force by means of an electromagnet 22 of the coupling system, arranged on the container 9 at the intake aperture 10. In particular, the electromagnet 22 is facing the fan 8 which is coaxial to the ring making the magnetic element 18. This cantilevered arrangement of the electromagnet 22 with respect to the fan allows to considerably compact the length of the crankshaft 4 and to reduce the overall dimensions of the cooling system 20.

By establishing a current in the electromagnet 22, a magnetic field is formed to attract or reject the magnetic element 18 by actuating or disengaging the clutch 5. In particular, when the electromagnet 22 exerts an attractive magnetic force on the magnetic element 18 connected to the first clutch member 11, the latter moves axially towards the fan 8 and comes into contact with the second clutch member 14. In particular, the first and second clutch disc 13, 15 are contacted by transmitting the motion of the crankshaft 4 to the fan 8.

Conversely, by exerting a bumper magnetic force, said first and second clutch members 11, 14 can be detached. In order to move away from the two clutch members 11, 14, a spring (not shown) can be provided between them.

It is to be understood that the magnetic element 18 is preferably ferromagnetic, in this way the rotating elements are not electrically powered, and electrical striking contacts or similar solutions are avoided with considerable advantages over the durability and reliability of the cooling system.

The annular coil-shaped electromagnet 22 is electrically powered by a control unit 20 which is activated to close the clutch if the engine temperature, i.e. the engine oil, in relation to the outside temperature is such as to justify the clutching, actuating the fan 8, as shown in Figure 2. In this respect, the control unit is connected to a temperature sensor 21, represented schematically, which measures an internal temperature inside the engine.

Conversely, when the engine temperature is cold, the electromagnet 22 disconnects the clutch 5 (or does not exert any attraction on the magnetic element 18), and so the crankshaft 4 is released from the fan 8 as shown in Fig. 1. The engine is then not cooled when it is not necessary to do so, thus increasing the available power, reducing fuel consumption and allowing a faster rise of engine temperature, especially in a cold climate at the operating temperature.

When the engine temperature rises above a predetermined threshold, which is the reference value of the internal temperature of the engine, it is detected by the first sensor 21, the control unit 20 then closes the clutch 5 by activating the dragging of the fan 8 and thus cooling the engine.

The electromagnet 22 is installed on the container 9, and in particular on the suction mouth grid 10. This means that the particular on the suction mouth grid 10. This means that the electromagnet 22 is installed in an area easily accessible from the outside and therefore maintenance of the system is facilitated.

Moreover, in the solution provided by the present invention, the magnetized elements are not moving, thus providing a simpler, more economical and less susceptible to malfunction. The main elements of the cooling system, that is, the fan 8, the shaft 4, and the container 9 with the suction mouth 10 are axially fixed, thus limiting the risk of impacts or incisions that would cause the system to malfunction.

The clutch 5 according to the present invention can also be placed in a portion of the fan 8 formed within the bulk volume of the same, greatly reducing the size and risk of clogging surfaces.

To the above-described cooling system a person skilled in the art, with the purpose of satisfying additional and contingent needs, could introduce several additional modifications and variants, however all comprised within the protective scope of the present invention, as defined by the enclosed claims.

## Claims

1. A Cooling system (20) of an internal combustion engine (1) comprising a cooling fan (8) and a driving shaft (4), said fan (8) being connected to said driving shaft (4) by means of a coupling system; said coupling system comprising:
- a clutch (5) comprising:
∘ a first clutch member (11) axially movable and torsionally connected to the driving shaft (4) or to the fan (8);
∘ a second axially fixed clutch member (14) connected to the fan (8) or to the driving shaft (4);
- a magnetic element (18) disposed on said first clutch member (11);
- an electromagnet (22) placed at an intake aperture (10) so as to project towards the fan (8) and configured to attract said magnetic element (18) when electrically powered to engage the fan (8) on the driving shaft (4) if the internal engine temperature is above a reference value; **characterized in that** said electromagnet (22) is connected to a container (9) of the fan comprising said intake aperture (10).

2. The cooling system (20) according to claim 1, wherein the driving shaft coincides or is connected to the engine driving shaft (4) of the engine to be cooled.

3. The cooling system (20) according to claim 1 or 2, wherein the electromagnet (22) is electrically powered by a control unit (20) connected to a temperature sensor (21) which measures an internal temperature inside the motor.

4. The cooling system (20) according to claim 1, 2 or 3, wherein said first clutch element (11) comprises a slot (11a) in which a pin (11b) integral with the driving shaft (4) slides to allow a relative axial sliding and prevent rotation in the circumferential direction.

5. The cooling system (20) according to any one of the preceding claims, wherein the second clutch member (14) is solidly connected to the fan (8).

6. A motorcycle comprising a cooling system (20) according to one or more of the preceding claims.

## Patentansprüche

1. Kühlsystem (20) eines Verbrennungsmotors (1), der ein Kühlgebläse (8) und eine Antriebswelle (4) umfasst, wobei das Gebläse (8) mit der Antriebswelle (4) mittels eines Kupplungssystems verbunden ist; wobei das Kupplungssystem umfasst:
- eine Kupplung (5), die umfasst:
- ein erstes Kupplungselement (11), das axial beweglich ist und mit der Antriebswelle (4) oder mit dem Gebläse (8) drehverbunden ist;
- ein zweites, axial fixiertes Kupplungselement (14), das mit dem Gebläse (8) oder der Antriebswelle (4) verbunden ist;
- ein magnetisches Element (18), das an dem ersten Kupplungselement (11) angeordnet ist;
- einen Elektromagneten (22), der an einer Einlassöffnung (10) angeordnet ist, sodass er in Richtung des Gebläses (8) hervorsteht, und zum Anziehen des magnetischen Elements (18), wenn er elektrisch angetrieben wird, konfiguriert ist, um das Gebläse (8) an die Antriebswelle (4) zu kuppeln, wenn die innere Motortemperatur über einem Referenzwert ist;
**dadurch gekennzeichnet, dass** der Elektromagnet (22) mit einem Behälter (9) des Gebläses, der die Einlassöffnung (10) umfasst, verbunden ist.

2. Kühlsystem (20) gemäß Anspruch 1, wobei die Antriebswelle mit der Motorantriebswelle (4) des zu kühlenden Motors übereinstimmt oder verbunden ist.

3. Kühlsystem (20) gemäß Anspruch 1 oder 2, wobei der Elektromagnet (22) durch eine Steuereinheit (20) elektrisch angetrieben wird, die mit einem Temperatursensor (21) verbunden ist, der eine innere Temperatur im Inneren des Motors misst.

4. Kühlsystem (20) gemäß Anspruch 1, 2 oder 3, wobei das erste Kupplungselement (11) einen Schlitz (11a) umfasst, in dem ein Stift (11b), der mit der Antriebswelle (4) integriert ist, gleitet, um ein relatives axiales Gleiten zu erlauben und Rotation in der Umfangsrichtung zu verhindern.

5. Kühlsystem (20) gemäß einem der vorhergehenden Ansprüche, wobei das zweite Kupplungselement (14) mit dem Gebläse (8) fest verbunden ist.

6. Motorrad, das ein Kühlsystem (20) gemäß einem oder mehreren der vorhergehenden Ansprüche umfasst.

## Revendications

1. Un système de refroidissement (20) d'un moteur à combustion interne (1), comprenant un ventilateur de refroidissement (8) et un arbre d'entraînement (4), ledit ventilateur (8) étant connecté audit arbre d'entraînement (4) au moyen d'un système de couplage ; ledit système de couplage comprenant :
- un embrayage (5) comprenant :
∘ un premier organe d'embrayage (11) mobile axialement et connecté en torsion à l'arbre d'entraînement (4) ou au ventilateur (8) ;
∘ un deuxième organe d'embrayage fixe axialement (14) connecté au ventilateur (8) ou à l'arbre d'entraînement (4) ;
- un élément magnétique (18) disposé sur ledit premier organe d'embrayage (11) ;
- un électroaimant (22) placé à une ouverture d'entrée (10) de façon à faire saillie vers le ventilateur (8) et configuré pour attirer ledit élément magnétique (18) lorsqu'il est alimenté en électricité pour mettre le ventilateur (8) en prise avec l'arbre d'entraînement (4) si la température interne du moteur est au-dessus d'une valeur de référence ; **caractérisé en ce que**
ledit électroaimant (22) est connecté à un conteneur (9) du ventilateur comprenant ladite ouverture d'entrée (10).

2. Le système de refroidissement (20) selon la revendication 1, dans lequel l'arbre de transmission coïncide ou est connecté à l'arbre de transmission (4) du moteur à refroidir.

3. Le système de refroidissement (20) selon la revendication 1 ou 2, dans lequel l'électroaimant (22) est alimenté en électricité par une unité de commande (20) connectée à un détecteur de température (21) qui mesure la température interne à l'intérieur du moteur.

4. Le système de refroidissement (20) selon la revendication 1, 2 ou 3, dans lequel ledit premier élément d'embrayage (11) comprend une fente (11a) dans laquelle une tige (11b) d'un seul tenant avec l'arbre d'entraînement (4) coulisse pour permettre un coulissement axial relatif et empêcher la rotation dans la direction circonférentielle.

5. Le système de refroidissement (20) selon l'une quelconque des revendications précédentes, dans lequel le deuxième organe d'embrayage (14) est connecté solidairement au ventilateur (8).

6. Une moto comprenant un système de refroidissement (20) selon l'une ou plusieurs des revendications précédentes.
